# EUROPEAN PATENT SPECIFICATION

(11) **EP 3 361 705 B1**
(45) Date of publication and mention of the grant of the patent: **05.04.2023**
(21) Application number: 17155152.6
(22) Date of filing: 08.02.2017
(51) Int. Cl.: H04L 67/1095

(54) **DISTRIBUTED NETWORK SYSTEM AND METHOD OF MONITORING DATA SYNCHRONIZATION IN A DISTRIBUTED NETWORK SYSTEM**
VERTEILTES NETZWERKSYSTEM UND VERFAHREN ZUR ÜBERWACHUNG VON DATENSYNCHRONISATION IN EINEM VERTEILTEN NETZWERKSYSTEM
SYSTÈME DE RÉSEAU DISTRIBUÉ ET PROCÉDÉ DE CONTRÔLE DE LA SYNCHRONISATION DE DONNÉES DANS UN SYSTÈME DE RÉSEAU DISTRIBUÉ

(43) Date of publication of application: 15.08.2018
(73) Proprietor: Alpine Electronics, Inc., Tokyo (JP)
(72) Inventor: Mast, Stefan, 70567 Stuttgart (DE); Zhu, Yunfang, 70567 Stuttgart (DE); DeHaan, Jaap, 70567 Stuttgart (DE)
(74) Representative: Schmitt-Nilson Schraud Waibel Wohlfrom Patentanwälte Partnerschaft mbB

(56) References cited:
- WO-A2-2009/018063
- US-A1- 2017 013 058

## Description

The present disclosure relates to a distributed network system and method of monitoring data synchronization in a distributed network system comprising a plurality of information holding devices, each of the information holding devices storing a plurality of data items.

Such distributed network systems are employed, for example, in manufacturing or research and development environments, in which multiple entities are involved, such as multiple manufacturing facilities each having its own data processing system in which multiple items of data are stored. For example, factories A, B and C, which are each involved in manufacturing a common product X in a cooperation among factories A, B and C, are each equipped with their own data processing system having at least one information holding device, such as a server computer and associated memory, in which items of data for manufacturing the product X are stored. In modern manufacturing environments, factories A, B and C are interconnected with each other in a network to exchange data among them. For example, factory A is competent for manufacturing part U of product X, factory B is competent for manufacturing part V of product X, and factory C is competent for manufacturing part W of product X. It may be that parts U, V, W are interrelated, for instance have a common interface in hardware or software.

In such environment, a situation may arise in which factory A will have to exchange items of data related to part U with factory B related to part V, and factory B will have to exchange items of data related to part V with factory C related to part W. For example, if factory A changes some construction of part U, this may have an influence on part V for factory B and part W for factory C, etc. In such exemplary situation, one or more data items held in factory A are related to one or more data items held in factories B and C, etc., and a data synchronization in a distributed network system among different information holding devices of the respective factories is necessary.

It may further be the situation that the factories A, B, and C employ three heterogeneous databases, i.e. each of the information holding devices holds its own database having a special kind of data format for storing the respective items of data. Each database may contain a plurality of data items with various fields.

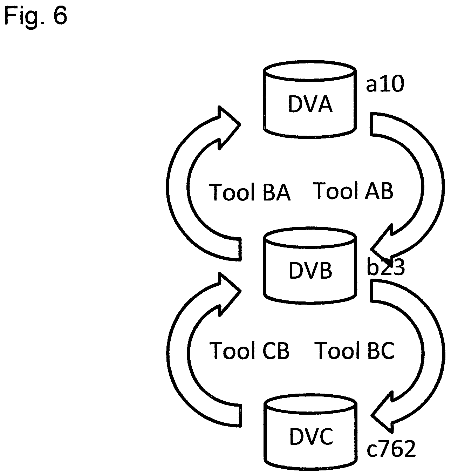

An exemplary situation of such distributed network system is depicted in Fig. 6, in which some data items of a database of an information holding device have to be exchanged or synchronized with one or more data items of databases of other information holding devices. For example, the data items are synchronized via a specialized tool for each couple of databases and direction. For example, tools AB, BC synchronize one data item from information holding device DVA to information holding device DVB, and from information holding device DVB to information holding device DVC, respectively.

Typically, any changes made to a data item that is synchronized are also propagated back (tools CB and BA). As an example, it is assumed that data item a10 of information holding device DVA is synchronized with data item b23 of information holding device DVB and data item c762 of information holding device DVC. The tools AB, BC, CB, BA keep the data items in "sync" (synchronization) running asynchronously among the information holding devices DVA, DVB, DVC. The data items a10, b23 and c762 are related and kept in sync. So are typically also thousands triplets of other data items. The related data items are in sync at a given time, if all changes have been propagated. However, the tools AB, BC, CB, BA only "see" the pair of databases handled by the respective tool and cannot decide about the overall status of the synchronization. For example, tool AB sees only data items a10 and b23 are related and are in sync after the tool AB performed the synchronization. However, the tool AB has no information about the synchronization of data item c762. As a result, it may be that the distributed network system does not work properly, and such situation is not detected, which may cause problems in manufacturing a product in a factory network system as described above.

JP 2011-258122 A discloses a data transfer unit and data cooperation system to enhance the extensibility and flexibility of the entire system that performs data cooperation. In a cooperation source system, when data is modified in a cooperation source database, a cooperation source execution part generates data sets that correspond to a cooperation source database logic model that corresponds to the modified data. In a data conversion/transfer system, a data conversion execution part refers to database cooperation information, converts the data in accordance with respective cooperation destination of the data sets, and generates data sets that correspond to a cooperation destination database a logic model and the like. JP 2014-044532 A provides a distributed information synchronization system and a distributed information synchronization method capable of performing synchronization processing even between databases whose table structures (data formats) are different. An information change detection section of an information holding device detects that information has been changed, and transmits the synchronization information of the changed information to a synchronization information transmission section which transmits the synchronization information to an information cooperation device. A synchronization information arithmetic section reads synchronization rule information, and performs arithmetic processing in accordance with the synchronization rule information, and transmits the synchronization information subjected to the arithmetic processing to a synchronization information transmission section, and the synchronization information transmission section transmits the synchronization information subjected to the arithmetic processing to the information holding devices in accordance with the synchronization rule information. Synchronization processing sections of the information holding devices update information holding device holding information with the received synchronization information.

WO 2009/018063 A2 discloses an asynchronous peer-to-peer data replication method implemented within a replication cluster comprising at least one master node and at least a first client node which includes entering an update in a data volume of the master node and storing the update in a master node storage. Next, updating a first active session in a master log and then sending a first message from the master node to the first client node. The first message comprises a first message content and first "piggybacked" data indicating that the first active session in the master log was updated. Next, receiving the first message by the first client node, registering that the first active session in the master log was updated and signaling internally that the first active session in the master log was updated. Next, sending an update request from the first client node to the master node, processing the update request by the master node and sending the update to the first client node. Finally, receiving the update by the first client node and updating the first active session in a first client log.

It is an object of the present invention to provide a distributed network system and a method of monitoring data synchronization in a distributed network system which are capable to ensure that each relevant change of a data item has been synchronized to all information holding devices concerned within the distributed network system.

The present invention relates to a distributed network system and method of monitoring data synchronization in a distributed network system according to the independent claims. Embodiments thereof are disclosed in the dependent claims.

According to an aspect, a distributed network system comprises a plurality of information holding devices comprising at least one first, second and third information holding device, the first information holding device comprising at least one first processing device and first storing device for storing a plurality of data items, wherein a first synchronization tool is configured for synchronization of a first one of the data items of the first information holding device with a second one of data items of the second information holding device. The first synchronization tool is configured to transmit synchronization information to a log data set containing information indicative of the first one of the data items of the first information holding device and second one of the data items of the second information holding device and associated synchronization information indicative of a time of the synchronization performed by the first synchronization tool. The second information holding device comprises at least one second processing device and second storing device for storing a plurality of data items, wherein a second synchronization tool is configured for synchronization of the second one of the data items of the second information holding device with a third one of data items of the third information holding device. The second synchronization tool is configured to supplement the log data set with information indicative of the third one of the data items of the third information holding device and associated synchronization information indicative of a time of the synchronization performed by the second synchronization tool. The distributed network system comprises at least one processing device configured to determine a performance of synchronization of the first through third one of the information holding devices using the log data set.

The third information holding device comprises at least one third processing device and third storing device for storing a plurality of data items, wherein a third synchronization tool is configured for synchronizing the third one of the data items with the second one of the data items, and the third synchronization tool is configured to supplement the log data set with information indicative of a time of the synchronization performed by the third synchronization tool.

According to another aspect, a method of monitoring data synchronization in a distributed network system comprising a plurality of information holding devices, each of the information holding devices storing a plurality of data items, comprises: synchronizing in a first synchronizing step a first one of the data items of a first one of the information holding devices with a second one of the data items of a second one of the information holding devices, transmitting the synchronization information to a log data set containing information indicative of the first one of the data items of the first information holding device and the second one of the data items of the second information holding device and associated synchronization information indicative of a time of the first synchronizing step, synchronizing in a second synchronizing step the second one of the data items of the second information holding device with a third one of the data items of a third one of the information holding devices, supplementing the log data set with information indicative of the third one of the data items of the third information holding device and associated synchronization information indicative of a time of the second synchronizing step, and determining a performance of synchronization of the first through third one of the information holding devices using the log data set.

The method further comprises synchronizing in a third synchronizing step the third one of the data items with the second one of the data items, and supplementing the log data set with information indicative about a time of the third synchronizing step.

In particular, any synchronization tool for synchronizing at least one of the first, second and third one of the data items is configured to supplement the log data set with information indicative about a time of the respective synchronization performed by the respective synchronization tool. That is, in any further synchronizing step involving at least one of the first, second and third one of the data items, the log data set is supplemented with information indicative about a time of the respective synchronizing step. Any of the synchronization tools can normally run on an own server computer, for example, or on any of the processing devices, but it is not important where the synchronization tool is running. The respective synchronization tool is independent and is not necessarily running on the processing devices (e.g. server computers) holding the information.

As a result of information reported by the various synchronization tools, each of the information holding devices of the distributed network is capable to store items of data which are belonging together, i.e. which are related to each other, in respective databases. Each set of related items can be grouped within a meta-object and accompanied with a history of exchanges that took place.

Potential applications of the present invention include pervasive monitoring of synchronization tools in a distributed network performing the synchronization. In principle, various kinds of rules for the synchronization and/or check of plausibility, detecting at least one missing propagation of synchronization, at least one false association of synchronization (if the rule of one to one relationship is broken, for example) can be applied. In addition, the performance of synchronization within the distributed network system can be monitored centrally, and turn around times of the synchronization can be calculated. It further enables the log data set to be used as a source for exchanges: for high priority data items, the tooling can find out the right sequence of synchronization tools to trigger to get the data item synchronized timely within the distributed network.

In particular, there is a one-to-one relationship between the first one of the data items of the first information holding device and second one of the data items of the second information holding device, and a one-to-one relationship between the second one of the data items of the second information holding device and the third one of the data items of the third information holding device.

According to an embodiment, the associated synchronization information is indicative of a source device and sink device (in particular a respective one of the information holding devices) of the respective synchronization step.

According to another aspect, there is provided a computer program product comprising software code sections which are configured to perform a method according to the invention as described herein. In particular, such computer program may be implemented in principle in any processing device which is appropriate to perform the respective function. Such processing device may be, for example, a separate component, or may be a distributed system using one or more processors and/or integrated circuits. The computer program may be stored on a computer readable medium.

Any aspects and embodiments described herein with respect to the method can equally be employed in the distributed network system configured by software and/or hardware appropriately.

Aspects of the invention and embodiments will now be described with reference to the following Figures in which
- Fig. 1: depicts a schematic diagram of a distributed network system according to an embodiment of the invention,
- Fig. 2: shows a first synchronizing step of a first data item of a first information holding device with a second data item of a second information holding device according to an embodiment of the invention,
- Fig. 3: shows a second synchronizing step of the second data item of the second information holding device with a third data item of a third information holding device according to an embodiment of the invention,
- Fig. 4: shows a third synchronizing step of the third data item of the third information holding device with the second data item of the second information holding device,
- Fig. 5: shows an exemplary log data set according to an embodiment of the invention,
- Fig. 6: shows a synchronization in a distributed information system according to an exemplary embodiment.

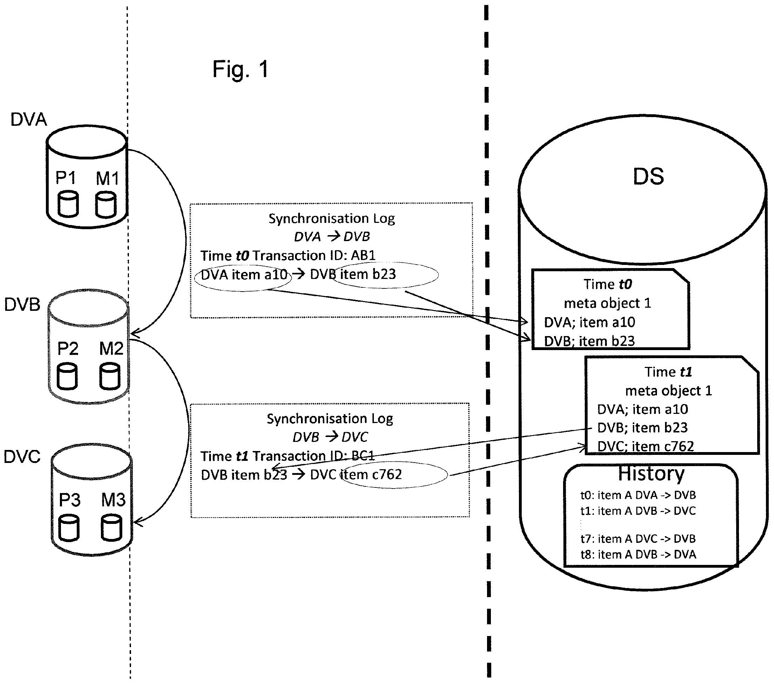

Fig. 1 shows a schematic diagram of a distributed network system according to an embodiment of the invention. The distributed network system comprises a plurality of information holding devices DVA, DVB, DVC, which can include, in principle, any number of information holding devices. In the present embodiment, the distributed network system comprises a first information holding device DVA, a second information holding device DVB and a third information holding device DVC. An information holding device can be or include, in principle, any type of data processing device, such as a server computer, personal computer, microprocessor, mobile computer, or control computer of any type of device. In particular, the first information holding device DVA, second information holding device DVB and third information holding device DVC (and any further information holding device used, if any) are different from each other, in particular are part of different computer entities. Likewise, their respective components (hardware and/or software) are different from each other and are part of different computer entities. The information holding devices may be implemented in or as respective computer devices, such as server computers, in a common network, for instance using a network connection like the Internet.

In the present embodiment, the first information holding device DVA comprises at least one first processing device P1, such as a microprocessor, and a first storing device M1, such as a data memory, for storing a plurality of data items therein. The second information holding device DVB comprises at least one second processing device P2, such as a microprocessor, and a second storing device M2, such as a data memory, for storing a plurality of data items therein. The third information holding device DVC comprises at least one third processing device P3, such as a microprocessor, and a third storing device M3, such as a data memory, for storing a plurality of data items therein. The information holding devices are coupled with each other in a distributed network configuration, such as through a wired or wireless network connection like the Internet.

In a distributed network system as shown in Fig. 1 particular data items of a database stored in information holding device DVA have to be exchanged or synchronized with one or more data items of databases of the other information holding devices DVB, DVC. For example, the data items are synchronized via a specialized tool for each couple of databases and direction. For example, a first synchronization tool AB synchronizes one data item from information holding device DVA to information holding device DVB, and a second synchronization tool BC synchronizes one data item from information holding device DVB to information holding device DVC .

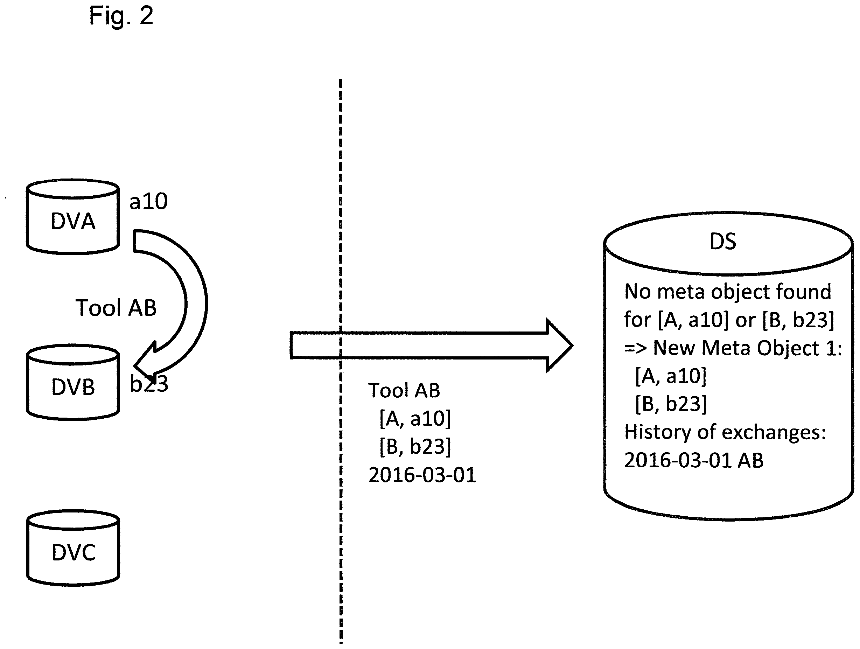

Fig. 2 shows a first synchronizing step of a first exemplary data item a10 stored in first information holding device DVA with an exemplary second data item b23 of second information holding device DVB according to an embodiment of the invention.

"Synchronizing" as used herein shall mean that a content of a data item stored in one information holding device is transferred to (in particular, is made equal to or corresponding to) a content of a data item stored in another information holding device. The respective data format used in any one of the information holding devices for storing a data item need not be identical, but can be different (e.g., corresponding) as long as the substance of content is substantially the same after the synchronization, as is known in the art.

The processing device P1 runs the first synchronization tool AB for synchronization of data item a10 of the information holding device DVA with a second data item b23 of the information holding device DVB. The synchronization tool AB transmits synchronization information to a log data set DS containing information indicative of the first data item a10 and second data item b23 and associated synchronization information indicative of a time of the synchronization performed by the synchronization tool AB. In particular, if no log data set DS has been set up until the time of synchronization, the synchronization tool AB determines that no meta object is found for data item a10 from source DVA (designated "[A, a10]") or data item b23 from source DVB (designated "[B, b23]"). As a result, the tool AB creates a new meta object 1 in log data set DS for [A, a10] and [B, b23]. An associated synchronization information indicative of a time of the synchronization performed by the synchronization tool AB is creates in date format designating the day of synchronization, e.g. "2016-03-01 AB", which means "1^{st} of March 2016 by tool AB".

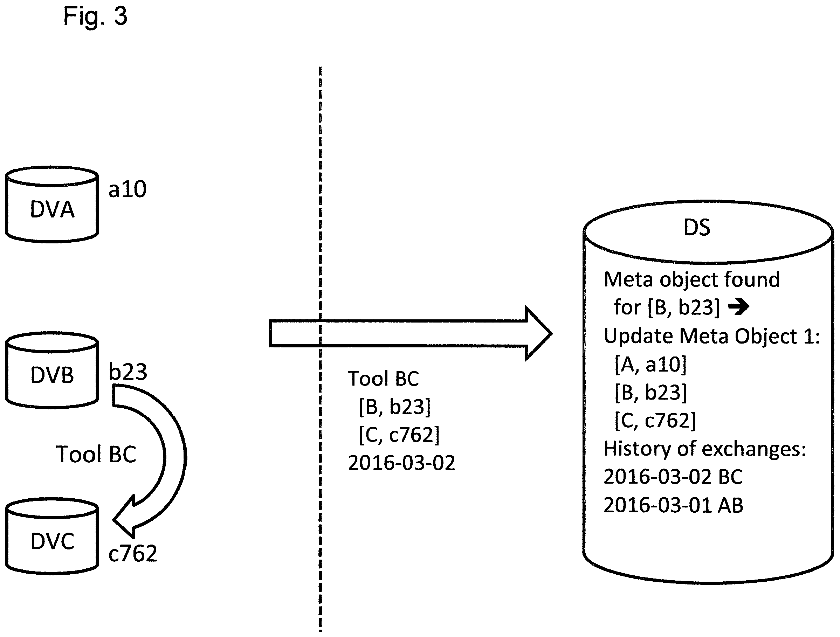

Fig. 3 shows a second synchronizing step of the second data item b23 of the second information holding device DVB with a third data item c762 of the third information holding device DVC. The process performed by synchronization tool BC is in principle the same as in Fig. 2. However, here the synchronization tool BC finds a meta object in log data set DS for data item b23 from source DVB designated [B, b23]. Therefore, the synchronization tool BC supplements the log data set DS with information indicative of the third data item c762 of the third information holding device DVC and associated synchronization information "2016-03-02 BC" indicative of a time of the synchronization performed by the second synchronization tool BC. In this way, a history of exchanges is built in log data set DS.

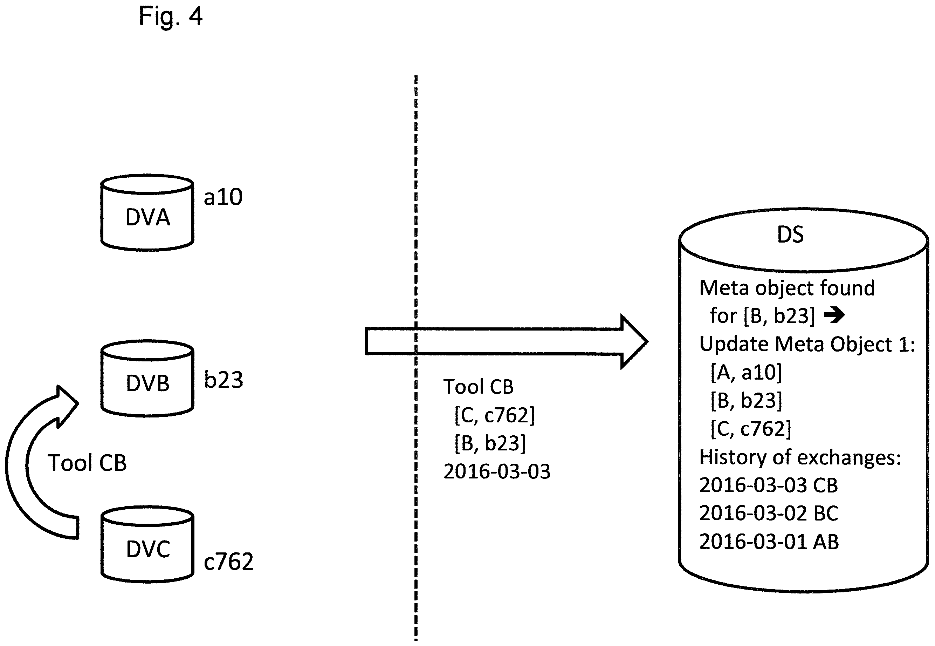

Typically, any changes made to a data item that is synchronized are also propagated back, such as performed by tool CB. Fig. 4 shows a third synchronizing step of the third data item c762 of the information holding device DVC with the second data item b23 of the information holding device DVB performed by synchronization tool CB. That is, in the present embodiment the third processing device P3 runs the synchronization tool CB for synchronizing the third data item (here: c762) with the second data item (here: b23). Accordingly, the synchronization tool CB supplements the log data set DS with information "2016-03-03 CB" indicative of a time of the synchronization performed by the synchronization tool CB, thus supplementing the history of exchanges. As the information indicative of the synchronization of the data item pair [C, c762] and [B, b23] is already contained in the log data set DS, no additional entry is thus created, but only the time information of the synchronization is supplemented.

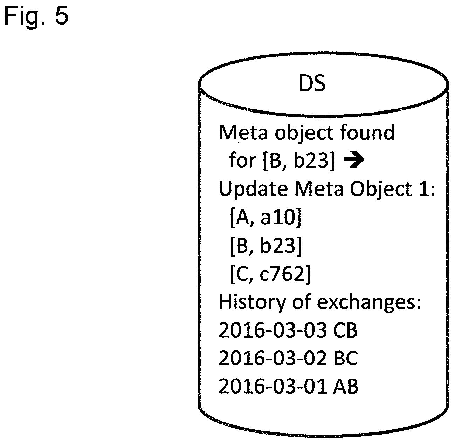

Fig. 5 shows an exemplary final log data set DS according to an embodiment of the invention after the third synchronizing step as described with reference to Fig. 4. In this regard, Fig. 1 shows an exemplary log data set DS according to another embodiment in a different data format, in which the individual synchronization steps are generating/supplementing the data set DS with different entries at synchronization times t0, t1, etc. In both instances, the log data set DS contains information that data item a10 of information holding device DVA has been synchronized with data item b23 of information holding device DVB and data item c762 of information holding device DVC. The synchronization tools AB, BC, CB keep the related data items a10, b23 and c762 in "sync" and run asynchronously among the information holding devices DVA, DVB, DVC. So are typically also thousands triplets of other data items. The related data items are in sync at a given time, if all changes have been propagated. By means of the log data set DS the overall status ("performance") of the synchronization can be determined. Advantageously, each of the processor devices P1, P2, P3, or any other processor (such as of an external server computer), can retrieve information about the synchronization of data item c762, and/or can determine a performance of a synchronization of the first through third information holding devices DVA-DVC using the log data set DS. As a result, with such information, the distributed network system may ensure to work properly which may, for example, prevent problems in manufacturing a product in a factory network system as described above having multiple external influences in manufacturing a product and synchronization thereof, such as by different suppliers.

This may be used, for example, for pervasive monitoring of synchronization tools in a distributed network. In principle, various kinds of rules for the synchronization and/or plausibility can be checked, and/or at least one missing propagation of synchronization, and/or at least one false association of synchronization (if the rule of one-to-one relationship is broken, for example) can be detected. In addition, the performance of synchronization within the distributed network system can be monitored centrally, and turn around times of the synchronization can be calculated. It further enables the log data set to be used as a source for exchanges. For example, for high priority data items, the tooling can find out the right sequence of synchronization tools to trigger to get the data item synchronized timely within the distributed network.

For example, one or more functions of each one of the processing devices P1, P2, P3 may be implemented at least in part in hardware and/or in software. Each processing device may be a separate component (in hardware and/or software), or may be a distributed system (in hardware and/or software) using one or more processors and/or integrated circuits. The aforementioned embodiments are meant to be examples useful for understanding the invention. The present invention is only defined by the appended claims.

## Claims

1. A distributed network system comprising
- a plurality of information holding devices (DVA, DVB, DVC) comprising at least one first, second and third information holding device, and a log data set (DS),
- the first information holding device (DVA) comprising at least one first processing device (P1) and first storing device (M1) for storing a plurality of data items, wherein a first synchronization tool (AB) is configured for synchronization of a first one of the data items (a10) of the first information holding device (DVA) with a second one of data items (b23) of the second information holding device (DVB),
- the first synchronization tool (AB) configured to transmit synchronization information to the log data set (DS) containing information indicative of the first one of the data items (a10) of the first information holding device (DVA) and second one of the data items (b23) of the second information holding device (DVB) and associated synchronization information indicative of a time (t0) of the synchronization performed by the first synchronization tool (AB),
- the second information holding device (DVB) comprising at least one second processing device (P2) and second storing device (M2) for storing a plurality of data items, wherein a second synchronization tool (BC) is configured for synchronization of the second one of the data items (b23) of the second information holding device (DVB) with a third one of data items (c762) of the third information holding device (DVC),
- the second synchronization tool (BC) configured to supplement the log data set (DS) with information indicative of the third one of the data items (c762) of the third information holding device (DVC) and associated synchronization information indicative of a time (t1) of the synchronization performed by the second synchronization tool (BC),
- the third information holding device (DVC) comprising at least one third processing device (P3) and third storing device (M3) for storing a plurality of data items, wherein a third synchronization tool (CB) is configured for synchronizing the third one of the data items (c762) with the second one of the data items (b23), and
- the third synchronization tool (CB) configured to supplement the log data set (DS) with information indicative of a time of the synchronization performed by the third synchronization tool (CB),
- and comprising at least one processing device (P1, P2, P3) configured to determine a performance of synchronization of the first through third one of the information holding devices (DVA, DVB, DVC) using the log data set (DS), wherein determining the performance of synchronization includes calculating a turn around time for a completed synchronization of the first through third one of the data items (a10, b23, c762), wherein a particular sequence of the first through third synchronization tools to trigger is determined in accordance with the determined performance of synchronization, so that a high priority data item can be synchronized timely within the distributed network system.

2. The distributed network system according to claim 1, wherein there is a one-to-one relationship between the first one of the data items (a10) of the first information holding device (DVA) and second one of the data items (b23) of the second information holding device (DVB), and a one-to-one relationship between the second one of the data items (b23) of the second information holding device (DVB) and the third one of the data items (c762) of the third information holding device (DVC).

3. The distributed network system according to one of claims 1 to 2, wherein the associated synchronization information is indicative of the source device (DVA-DVC) and sink device (DVA-DVC) of the respective synchronization.

4. A method of monitoring data synchronization in a distributed network system comprising a plurality of information holding devices (DVA, DVB, DVC), each of the information holding devices storing a plurality of data items, the method comprising:
- synchronizing in a first synchronizing step a first one of the data items (a10) of a first one of the information holding devices (DVA) with a second one of the data items (b23) of a second one of the information holding devices (DVB),
- transmitting the synchronization information to a log data set (DS) containing information indicative of the first one of the data items (a10) of the first information holding device (DVA) and the second one of the data items (b23) of the second information holding device (DVB) and associated synchronization information indicative of a time (t0) of the first synchronizing step,
- synchronizing in a second synchronizing step the second one of the data items (b23) of the second information holding device (DVB) with a third one of the data items (c762) of a third one of the information holding devices (DVC),
- supplementing the log data set (DS) with information indicative of the third one of the data items (c762) of the third information holding device (DVC) and associated synchronization information indicative of a time (t1) of the second synchronizing step,
- synchronizing in a third synchronizing step the third one of the data items (c762) with the second one of the data items (b23), and
- supplementing the log data set (DS) with information indicative about a time of the third synchronizing step,
- determining a performance of synchronization of the first through third one of the information holding devices (DVA, DVB, DVC) which includes calculating a turn around time for a completed synchronization of the first through third one of the data items (a10, b23, c762) using the log data set (DS), and
- determining a particular sequence of the first synchronizing step, second synchronizing step, and third synchronizing step in accordance with the determined performance of synchronization, so that a high priority data item can be synchronized timely within the distributed network system.

5. The method according to claim 4, wherein in any further synchronizing step involving at least one of the first, second and third one of the data items (a10, b23, c762), the log data set (DS) is supplemented with information indicative about a time of the respective synchronizing step.

6. The method according to one of claims 4 to 5, further comprising determining at least one of: at least one missing propagation of synchronization and at least one false association of synchronization.

7. A computer program product comprising software code sections which are configured to perform a method according to one of claims 4 to 6.

## Patentansprüche

1. Verteiltes Netzwerksystem, das aufweist:
- eine Mehrzahl von Informationshaltevorrichtungen (DVA, DVB, DVC), die mindestens eine erste, zweite und dritte Informationshaltevorrichtung aufweisen, und einen Protokolldatensatz (DS),
- wobei die erste Informationshaltevorrichtung (DVA) mindestens eine erste Verarbeitungsvorrichtung (P1) und eine erste Speichervorrichtung (M1) zum Speichern einer Mehrzahl von Datenelementen aufweist, wobei ein erstes Synchronisationsinstrument (AB) dazu ausgelegt ist, ein erstes der Datenelemente (a10) der ersten Informationshaltevorrichtung (DVA) mit einem zweiten der Datenelemente (b23) der zweiten Informationshaltevorrichtung (DVB) zu synchronisieren,
- wobei das erste Synchronisationsinstrument (AB) dazu ausgelegt ist, Synchronisationsinformationen an den Protokolldatensatz (DS) mit Informationen, die das erste der Datenelemente (a10) der ersten Informationshaltevorrichtung (DVA) und das zweite der Datenelemente (b23) der zweiten Informationshaltevorrichtung (DVB) angeben, sowie zugehörige Synchronisationsinformationen, die eine Zeit (t0) der von dem ersten Synchronisationsinstrument (AB) durchgeführten Synchronisation angeben, zu senden,
- wobei die zweite Informationshaltevorrichtung (DVB) mindestens eine zweite Verarbeitungsvorrichtung (P2) und eine zweite Speichervorrichtung (M2) zum Speichern einer Mehrzahl von Datenelementen aufweist, wobei ein zweites Synchronisationsinstrument (BC) dazu ausgelegt ist, das zweite der Datenelemente (b23) der zweiten Informationshaltevorrichtung (DVB) mit einem dritten der Datenelemente (c762) der dritten Informationshaltevorrichtung (DVC) zu synchronisieren,
- wobei das zweite Synchronisationsinstrument (BC) dazu ausgelegt ist, den Protokolldatensatz (DS) mit Informationen, die das dritte der Datenelemente (c762) der dritten Informationshaltevorrichtung (DVC) angeben, und zugehörigen Synchronisationsinformation, die eine Zeit (t1) der von dem zweiten Synchronisationsinstrument (BC) durchgeführten Synchronisation angeben, zu ergänzen,
- wobei die dritte Informationshaltevorrichtung (DVC) mindestens eine dritte Verarbeitungsvorrichtung (P3) und eine dritte Speichervorrichtung (M3) zum Speichern einer Mehrzahl von Datenelementen aufweist, wobei ein drittes Synchronisationsinstrument (CB) dazu ausgelegt ist, das dritte der Datenelemente (c762) mit dem zweiten der Datenelemente (b23) zu synchronisieren, und
- wobei das dritte Synchronisationsinstrument (CB) dazu ausgelegt ist, den Protokolldatensatz (DS) mit Informationen zu ergänzen, die eine Zeit der von dem dritten Synchronisationsinstrument (CB) durchgeführten Synchronisation angeben,
- und mindestens eine Verarbeitungsvorrichtung (P1, P2, P3) aufweist, die dazu ausgelegt ist, unter Verwendung des Protokolldatensatzes (DS) eine Synchronisationsleistung der ersten bis dritten der Informationshaltevorrichtungen (DVA, DVB, DVC) zu bestimmen, wobei das Bestimmen der Synchronisationsleistung das Berechnen einer Durchlaufzeit für eine abgeschlossene Synchronisation des ersten bis dritten der Datenelemente (a10, b23, c762) umfasst, wobei eine spezielle Sequenz des ersten bis dritten auszulösenden Synchronisationsinstruments gemäß der bestimmten Synchronisationsleistung bestimmt wird, sodass ein Datenelement mit hoher Priorität in dem verteilten Netzwerksystem zeitgerecht synchronisiert werden kann.

2. Verteiltes Netzwerksystem nach Anspruch 1, wobei eine Eins-zu-Eins-Beziehung zwischen dem ersten der Datenelemente (a10) der ersten Informationshaltevorrichtung (DVA) und dem zweiten der Datenelemente (b23) der zweiten Informationshaltevorrichtung (DVB) besteht und eine Eins-zu-Eins-Beziehung zwischen dem zweiten der Datenelemente (b23) der zweiten Informationshaltevorrichtung (DVB) und dem dritten der Datenelemente (c762) der dritten Informationshaltevorrichtung (DVC) besteht.

3. Verteiltes Netzwerksystem nach einem der Ansprüche 1 bis 2, wobei die zugehörigen Synchronisationsinformationen die Quellvorrichtung (DVA-DVC) und die Zielvorrichtung (DVA-DVC) der jeweiligen Synchronisation angeben.

4. Verfahren zur Überwachung von Datensynchronisation in einem verteilten Netzwerksystem, das eine Mehrzahl von Informationshaltevorrichtungen (DVA, DVB, DVC) aufweist, wobei jede der Informationshaltevorrichtungen eine Mehrzahl von Datenelementen speichert, wobei das Verfahren aufweist:
- Synchronisieren eines ersten der Datenelemente (a10) einer ersten der Informationshaltevorrichtungen (DVA) mit einem zweiten der Datenelemente (b23) einer zweiten der Informationshaltevorrichtungen (DVB) in einem ersten Synchronisationsschritt,
- Senden der Synchronisationsinformationen an einen Protokolldatensatz (DS) mit Informationen, die das erste der Datenelemente (a10) der ersten Informationshaltevorrichtung (DVA) und das zweite der Datenelemente (b23) der zweiten Informationshaltevorrichtung (DVB) angeben, sowie zugehörigen Synchronisationsinformationen, die eine Zeit (t0) des ersten Synchronisationsschritts angeben,
- Synchronisieren des zweiten der Datenelemente (b23) der zweiten Informationshaltevorrichtung (DVB) mit einem dritten der Datenelemente (c762) einer dritten der Informationshaltevorrichtungen (DVC) in einem zweiten Synchronisationsschritt,
- Ergänzen des Protokolldatensatzes (DS) mit Informationen, die das dritte der Datenelemente (c762) der dritten Informationshaltevorrichtung (DVC) angeben, und zugehörigen Synchronisationsinformation, die eine Zeit (t1) des zweiten Synchronisationsschritts angeben,
- Synchronisieren des dritten der Datenelemente (c762) mit dem zweiten der Datenelemente (b23) in einem dritten Synchronisationsschritt, und
- Ergänzen des Protokolldatensatzes (DS) mit Informationen, die eine Zeit des dritten Synchronisationsschritts angeben,
- Bestimmen einer Synchronisationsleistung der ersten bis dritten der Informationshaltevorrichtungen (DVA, DVB, DVC), was das Berechnen einer Durchlaufzeit für eine abgeschlossene Synchronisation des ersten bis dritten der Datenelemente (a10, b23, c762) unter Verwendung des Protokolldatensatzes (DS) umfasst, und
- Bestimmen einer speziellen Sequenz des ersten Synchronisationsschritts, des zweiten Synchronisationsschritts und des dritten Synchronisationsschritts gemäß der bestimmten Synchronisationsleistung, sodass ein Datenelement mit hoher Priorität in dem verteilten Netzwerksystem zeitgerecht synchronisiert werden kann.

5. Verfahren nach Anspruch 4, wobei in jeglichem weiteren Synchronisationsschritt, der mindestens eines des ersten, zweiten und dritten der Datenelemente (a10, b23, c762) betrifft, der Protokolldatensatz (DS) mit Informationen ergänzt wird, die eine Zeit des jeweiligen Synchronisationsschritts angeben.

6. Verfahren nach einem der Ansprüche 4 bis 5, das ferner das Bestimmen von mindestens einem umfasst von: mindestens einer fehlenden Weiterleitung der Synchronisation und mindestens einer falschen Zuordnung der Synchronisation.

7. Computerprogrammprodukt mit Softwarecodeabschnitten, die dazu ausgelegt sind, ein Verfahren nach einem der Ansprüche 4 bis 6 durchzuführen.

## Revendications

1. Un système de réseau distribué qui comprend :
- un certain nombre de dispositifs faisant office de banques d'informations (DVA, DVB, DVC) qui comprennent au moins un premier, un deuxième et un troisième dispositif faisant office de banque d'informations, et un fichier journal (DS) ;
- le premier dispositif faisant office de banque d'informations (DVA) comprenant au moins un premier dispositif de traitement (P1) et un premier dispositif de mise en mémoire (M1) destiné à la mise en mémoire de données élémentaires ; dans lequel un premier outil de synchronisation (AB) est configuré pour la synchronisation d'une première donnée élémentaire parmi les données élémentaires (a10) du premier dispositif faisant office de banque d'informations (DVA) avec une deuxième donnée élémentaire parmi les données élémentaires (b23) du deuxième dispositif faisant office de banque d'informations (DVB) ;
- le premier outil de synchronisation (AB) est configuré pour transmettre des informations synchronisation au fichier journal (DS) qui contiennent des informations qui désignent la première donnée élémentaire parmi les données élémentaires (a10) du premier dispositif faisant office de banque d'informations (DVA) et la deuxième donnée élémentaire parmi les données élémentaires (b23) du deuxième dispositif faisant office de banque d'informations (DVB), ainsi que des informations de synchronisation associées qui désignent un moment (t0) qui correspond à la synchronisation mise en oeuvre par le premier outil de synchronisation (AB) ;
- le deuxième dispositif faisant office de banque d'informations (DVB) comprenant au moins un deuxième dispositif de traitement (P2) et un deuxième dispositif de mise en mémoire (M2) pour la mise en mémoire d'un certain nombre de données élémentaires ; dans lequel un deuxième outil de synchronisation (BC) est configuré pour la synchronisation de la deuxième donnée élémentaire parmi les données élémentaires (b23) du deuxième dispositif faisant office de banque d'informations (DVB) avec une troisième donnée élémentaire parmi les données élémentaires (c762) du troisième dispositif faisant office de banque d'informations (DVC) ;
- le deuxième outil de synchronisation (BC) est configuré pour ajouter au fichier journal (DS) des informations qui concernent la troisième donnée élémentaire parmi les données élémentaires (c762) du troisième dispositif faisant office de banque d'informations (DVC) et des informations de synchronisation associées qui désignent un moment (t1) qui correspond à la synchronisation mise en oeuvre par le deuxième outil de synchronisation (BC) ;
- le troisième dispositif faisant office de banque d'informations (DVC) comprenant au moins un troisième dispositif de traitement (P3) et un troisième dispositif de mise en mémoire (M3) pour la mise en mémoire d'un certain nombre de données élémentaires ; dans lequel un troisième outil de synchronisation (CB) est configuré pour synchroniser la troisième donnée élémentaire parmi les données élémentaires (c762) avec la deuxième donnée élémentaire parmi les données élémentaires (b23) ; et
- le troisième outil de synchronisation (CB) est configuré pour ajouter au fichier journal (DS) des informations qui désignent un moment qui correspond à la synchronisation mise en oeuvre par le troisième outil de synchronisation (CB) ;
- et qui comprend au moins un dispositif de traitement (P1, P2, P3) qui est configuré pour déterminer une performance de synchronisation du premier au troisième dispositif faisant office de banque d'informations (DVA, DVB, DVC) en utilisant le fichier journal (DS) ; dans lequel le fait de déterminer la performance de la synchronisation englobe le fait de calculer un délai d'exécution pour une synchronisation menée à son terme en passant de la première à la troisième donnée élémentaire parmi les données élémentaires (a10, b23, c762) ; dans lequel une séquence particulière du premier au troisième outil de synchronisation qui doit être déclenchée est déterminée en conformité avec la performance déterminée de synchronisation, d'une manière telle que l'on peut synchroniser au bon moment une donnée élémentaire à priorité haute au sein du système de réseau distribué.

2. Le système de réseau distribué selon la revendication 1, dans lequel une relation de un à un existe entre la première donnée élémentaire parmi les données élémentaires (a10) du premier dispositif faisant office de banque d'informations (DVA) et la deuxième donnée élémentaire parmi les données élémentaires (b23) du deuxième dispositif faisant office de banque d'informations, et une relation de un à un existe entre la deuxième donnée élémentaire parmi les données élémentaires (b23) du deuxième dispositif faisant office de banque d'informations (DVB) et la troisième donnée élémentaire parmi les données élémentaires (c762) du troisième dispositif faisant office de banque d'informations (DVC).

3. Le système de réseau distribué selon la revendication 1 ou 2, dans lequel les informations de synchronisation associées fournissent une indication en ce qui concerne le dispositif source (DVA-DVC) et le dispositif de collecte (DVA-DVC) de la synchronisation respective.

4. Un procédé de surveillance d'une synchronisation de données dans un système de réseau distribué qui comprend un certain nombre de dispositifs faisant office de banques d'informations (DVA, DVB, DVC), chacun des dispositifs faisant office de banques d'informations mettant en mémoire un certain nombre de données élémentaires, le procédé comprenant :
- la synchronisation, dans une première étape de synchronisation, d'une première donnée élémentaire parmi les données élémentaires (a10) d'un premier dispositif parmi les dispositifs faisant office de banque d'informations (DVA) avec une deuxième donnée élémentaire parmi les données élémentaires (b23) d'un deuxième dispositif parmi les dispositifs faisant office de banque d'informations (DVB) ;
- la transmission des informations de synchronisation à un fichier journal (DS) qui contiennent des informations qui désignent la première donnée élémentaire parmi les données élémentaires (a10) du premier dispositif faisant office de banque d'informations (DVA) et la deuxième donnée élémentaire parmi les données élémentaires (b23) du deuxième dispositif faisant office de banque d'informations (DVB) ainsi que des informations de synchronisation associées qui désignent un moment (t0) qui correspond à la première étape de synchronisation ;
- la synchronisation, dans une deuxième étape de synchronisation, de la deuxième donnée élémentaire parmi les données élémentaires (b23) du deuxième dispositif faisant office de banque d'informations (DVB) avec une troisième donnée élémentaire parmi les données élémentaires (c762) d'un troisième dispositif parmi les dispositifs faisant office de banque d'informations (DVC) ;
- l'addition au fichier journal (DS) d'informations qui désignent la troisième donnée élémentaire parmi les données élémentaires (c762) du troisième dispositif faisant office de banque d'informations (DVC) ainsi que des informations de synchronisation associées qui désignent un moment (t1) qui correspond à la deuxième étape de synchronisation ;
- la synchronisation, dans une troisième étape de synchronisation, de la troisième donnée élémentaire parmi les données élémentaires (c762) avec la deuxième donnée élémentaire parmi les données élémentaires (b23) ; et
- l'addition au fichier journal (DS) d'informations qui désignent un moment qui correspond à la troisième étape de synchronisation ;
- la détermination d'une performance de synchronisation du premier au troisième dispositif faisant office de banque d'informations (DVA, DVB, DVC), qui englobe le fait de calculer un délai d'exécution pour une synchronisation menée à son terme en passant de la première à la troisième donnée élémentaire parmi les données élémentaires (a10, b23, c762) en utilisant le fichier journal (DS) ; et
- la détermination d'une séquence particulière de la première étape de synchronisation, de la deuxième étape de synchronisation et de la troisième étape de synchronisation en conformité avec la performance déterminée de synchronisation, d'une manière telle que l'on peut synchroniser au bon moment une donnée élémentaire à priorité haute au sein du système de réseau distribué.

5. Le procédé selon la revendication 4, dans lequel dans n'importe quelle étape de synchronisation ultérieure qui implique au moins une donnée élémentaire choisie parmi la première, la deuxième et la troisième donnée élémentaire (a10, b23, c762), on ajoute au fichier journal (DS) des informations qui désignent un moment qui correspond à l'étape de synchronisation respective.

6. Le procédé selon l'une quelconque des revendications 4 à 5, qui comprend en outre le fait de déterminer au moins un élément choisi parmi : au moins une propagation manquante de synchronisation et au moins une fausse association de synchronisation.

7. Un produit de programme informatique qui comprend des segments de codes de logiciels qui sont configurés pour la mise en oeuvre d'un procédé conformément à l'une quelconque des revendications 4 à 6.
